# EUROPEAN PATENT APPLICATION

(11) **EP 4 815 467 A1**
(43) Date of publication of application: **30.09.2026**
(21) Application number: 24893591.8
(22) Date of filing: 22.11.2024
(51) Int. Cl.: H04N 21/431

(54) **LIVE-STREAMING INTERACTION METHOD AND APPARATUS, DEVICE AND STORAGE MEDIUM**

(30) Priority: 24.11.2023 CN 202311587772
(71) Applicant: Beijing Zitiao Network Technology Co., Ltd., Beijing 100190 (CN)
(72) Inventor: WANG, Haoan, Beijing 100028 (CN); ZHOU, Enjie, Beijing 100028 (CN); GUO, Xuan, Beijing 100028 (CN); LIAO, Xueying, Beijing 100028 (CN); KOU, Fengyi, Beijing 100028 (CN); WANG, Bing, Beijing 100028 (CN); ZHANG, Yihan, Beijing 100028 (CN); MO, Zhiqiang, Beijing 100028 (CN); FENG, Suliu, Beijing 100028 (CN)
(74) Representative: Marks & Clerk LLP
(86) International application number: PCT/CN2024/133854
(87) International publication number: WO 2025/108437

(57) **Abstract**

Embodiments of the disclosure relate to a method, an apparatus, a device, and a storage medium for live streaming interaction. The method proposed herein includes: presenting a live streaming interface, the live streaming interface including a plurality of display areas corresponding to a plurality of live streaming rooms; presenting, based on an interaction operation associated with a first live streaming room of the plurality of live streaming room, a first dynamic effect corresponding to the interaction operation in the live streaming interface s; and presenting a second dynamic effect corresponding to an interaction event in a second display area of the plurality of display areas, the second display area corresponding to a second live streaming room of the plurality of live streaming rooms. In this way, the embodiments of the disclosure are capable of providing dynamic effect interaction across live streaming rooms, thereby improving experience of the live streaming.

## Description

The present application claims priority to Chinese Patent Application No. 202311587772.5, filed on November 24, 2023, and entitled " METHOD AND APPARATUS, DEVICE, AND STORAGE MEDIUM FOR LIVE STREAMING INTERACTION ", the entirety of which is incorporated herein by reference.

### TECHNICAL FIELD

Example embodiments of the present disclosure generally relate to the field of computers, and in particular, to a method, an apparatus, a device, and a computer-readable storage medium for live streaming interaction.

### BACKGROUND

With the development of computer technologies, the Internet has become an important source for people to obtain various contents. A live streaming technology that uses the Internet and streaming media technologies to disseminate contents has been rapidly developed, and people may engage in various types of interactions and obtain rich types of information through a live streaming room.

### SUMMARY

In a first aspect of the present disclosure, a method for live streaming interaction is provided. The method includes: presenting a live streaming interface, the live streaming interface including a plurality of display areas corresponding to a plurality of live streaming rooms; presenting, based on the interaction operation associated with a first live streaming room of the plurality of live streaming rooms, a first dynamic effect corresponding to an interaction operation in the live streaming interface; and presenting a second dynamic effect corresponding to an interaction event in a second display area of the plurality of display areas, the second display area corresponding to a second live streaming room of the plurality of live streaming rooms.

In a second aspect of the present disclosure, an apparatus for live streaming interaction is provided. The apparatus includes: an interface presenting module configured to present a live streaming interface, the live streaming interface including a plurality of display areas corresponding to a plurality of live streaming rooms; a first dynamic effect module configured to present, based on the interaction operation associated with a first live streaming room of the plurality of live streaming rooms, a first dynamic effect corresponding to an interaction operation in the live streaming interface; and a second dynamic effect module configured to present a second dynamic effect corresponding to an interaction event in a second display area of the plurality of display areas, the second display area corresponding to a second live streaming room of the plurality of live streaming rooms.

In a third aspect of the present disclosure, an electronic device is provided. The device includes at least one processing unit; and at least one memory, wherein the at least one memory is coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It would be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. Throughout the drawings, the same or similar reference signs denote to the same or similar elements, where:
FIG. 1 illustrates a schematic diagram of an example environment in which the embodiments according to the present disclosure may be implemented;
FIGS. 2A to 2D illustrate example interfaces according to some embodiments of the present disclosure;
FIG. 3 illustrates a flowchart of an example live streaming interaction process according to some embodiments of the present disclosure;
FIG. 4 illustrates a schematic structural block diagram of a live streaming interaction apparatus according to some embodiments of the present disclosure; and
FIG. 5 illustrates a block diagram of an electronic device capable of implementing a plurality of embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it would be appreciated that the present disclosure may be implemented in various forms and should not be construed as limited to the embodiments set forth herein; on the contrary, these embodiments are provided for a more thorough and complete understanding of the present disclosure. It would be appreciated that the drawings and embodiments of the present disclosure are only for illustrative purposes, and are not intended to limit the scope of protection of the present disclosure.

It should be noted that the titles of any section/subsection provided herein are not restrictive. Various embodiments are described throughout this document, and any type of embodiment may be included under any section/subsection. In addition, the embodiments described in any section/subsection may be combined in any way with any other embodiments described in the same section/subsection and/or different section/subsection.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user's data, data acquisition and/or use, and so on. These aspects all comply with corresponding laws, regulations, and related provisions. In the embodiments of the present disclosure, all data collection, acquisition, processing, machining, forwarding, use, etc., are carried out on the premise that the user is aware and confirms. Accordingly, when implementing the embodiments of the present disclosure, the users shall be informed of the type, range of use, use scenarios, etc., of the data or information that may be involved and obtain the authorization of the users in an appropriate manner in accordance with relevant laws and regulations. The specific manner of informing and/or authorizing may vary according to actual situations and application scenarios, and the scope of the present disclosure is not limited in this regard.

If the solutions in the specification and embodiments involve personal information processing, the processing will be carried out on the premise that there is a legal basis (for example, the consent of the personal information subject is obtained, or it is necessary to perform a contract, etc.), and the processing will only be carried out within the scope of provisions or agreements. If a user refuses to process personal information other than the necessary information required for the basic functions, it will not affect the user's use of the basic functions.

As introduced above with reference to the background, live streaming has become an important form of Internet interaction. For example, people may initiate a live streaming and become a live streamer of a live streaming room. Alternatively, people may also join other live streaming rooms to obtain corresponding live streaming contents.

In some scenarios, multiple live streaming rooms may participate in a live streaming interaction event. In various types of live streaming interaction events, a user in a live streaming room may usually only perform dynamic effect interaction with the live streaming room in which the user is located, which greatly limits the user's freedom of interaction.

In view of this, embodiments of the present disclosure provide a solution of live streaming interaction. According to this solution, a live streaming interface may be presented, wherein the live streaming interface includes a plurality of display areas corresponding to a plurality of live streaming rooms. Further, a first dynamic effect corresponding to an interaction operation may be presented in the live streaming interface based on the interaction operation associated with a first live streaming room of the plurality of live streaming rooms. Accordingly, a second dynamic effect corresponding to an interaction event may be presented in a second display area of the plurality of display areas, wherein the second display area corresponds to a second live streaming room of the plurality of live streaming rooms.

Based on the above method, the embodiments of the present disclosure are capable of providing dynamic effect interaction across live streaming rooms, thereby improving experience of the live streaming.

Various example implementations of this solution will be described in detail below in further with reference to the drawings.

### EXAMPLE ENVIRONMENT

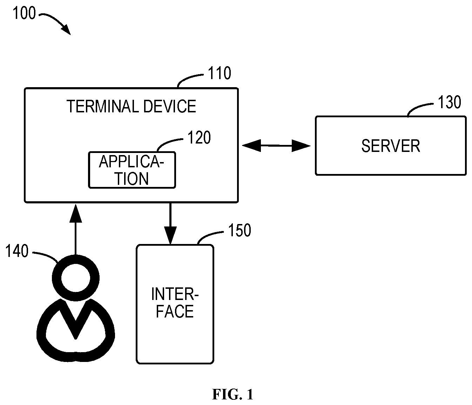

FIG. 1 illustrates a schematic diagram of an example environment 100 in which the embodiments of the present disclosure may be implemented. As shown in FIG. 1, the example environment 100 may include a terminal device 110.

In this example environment 100, the terminal device 110 may run an application 120 for providing and viewing media contents. The application 120 may be any suitable type of application for providing and viewing media contents, examples of which may include but are not limited to: an online video application and a live streaming application. A user 140 may interact with the application 120 via the terminal device 110 and/or its attached devices. The user 140 may be, for example, a user (also referred to as a host) who provides live streaming contents and a user (also referred to as an audience) who watches live streaming.

In the environment 100 of FIG. 1, if the application 120 is active, the terminal device 110 may present a live streaming interface 150 through the application 120.

In some embodiments, the terminal device 110 communicates with a server 130 to implement the provision of the services of the application 120. The terminal device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR (virtual reality)/AR (augmented reality) device, a Personal Communication System (PCS) device, a personal navigation device, a Personal Digital Assistant (PDA), an audio/video player, a digital camera/video camera, a positioning device, a television receiver, a radio broadcast receiver, an e-book device, a game device, or any combination of the foregoing, including the fittings and peripherals of these devices or any combination thereof. In some embodiments, the terminal device 110 may also support any type of user-specific interface (such as a "wearable" circuit, etc.).

The server 130 may be a standalone physical server, or may be a server cluster or a distributed system that consists of a plurality of physical servers, or may be a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms, and so on. The server 130 may include, for example, a computing system/server, such as a mainframe, an edge computing node, a computing device in a cloud environment, and so on. The server 130 may provide background services for the application 120 in the terminal device 110 that supports virtual scenes.

A communication connection may be established between the server 130 and the terminal device 110. The communication connection may be established via a wired or a wireless manner. The communication connection may include, but is not limited to, a Bluetooth connection, a mobile network connection, a Universal Serial Bus (USB) connection, a Wireless Fidelity (Wi-Fi) connection, etc., and the embodiments of the present disclosure are not limited in this regard. In the embodiments of the present disclosure, the server 130 and the terminal device 110 may implement signaling interaction through the communication connection in between.

It should be appreciated that the structures and functions of various elements in the environment 100 are described for illustrative purposes only, and do not imply any limitation to the scope of the present disclosure.

Some example embodiments of the present disclosure will continue to be described below with reference to the drawings.

### EXAMPLE INTERACTION

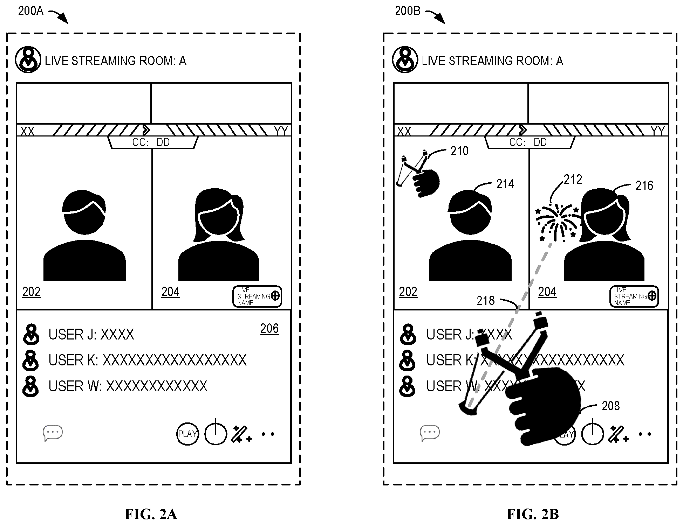

The interaction process in some embodiments according to the present disclosure will be described below with reference to FIGS. 2A to 2D. FIGS. 2A to 2D illustrate example interfaces 200A to 200D in some embodiments according to the present disclosure. The interfaces 200A to 200D may be provided, for example, by the terminal device 110 shown in FIG. 1, and they may also be referred to as live streaming interfaces.

FIG. 2A illustrates an example interface 200A in some embodiments according to the present disclosure. As shown in FIG. 2A, the interface 200A may correspond to, for example, a live streaming interface of "live streaming room A" (also referred to as a first live streaming room). As shown in FIG. 2A, the first live streaming room may participate in an interaction event of a plurality of live streaming rooms, for example, "live streaming room A" may perform a live streaming interaction event such as co-streaming or Player Killing (PK) with another live streaming room (for example, live streaming room B, also referred to as a second live streaming room).

Accordingly, as shown in FIG. 2A, the interface 200A may include a display area 202 and a display area 204. The display area 202 may correspond to, for example, the first live streaming room (for example, live streaming room A) for displaying the live streaming contents of the first live streaming room. The display area 204 may correspond to, for example, a second live streaming room (for example, live streaming room B) participating in the live streaming interaction event for displaying the live streaming contents of the second live streaming room.

Additionally, the interface 200A may further include, for example, an interaction area 206 for displaying interaction contents (for example, comment information, gift information, etc.) associated with the first live streaming room (for example, live streaming room A).

In some embodiments, as shown in FIG. 2B, the terminal device 110 may present a dynamic effect corresponding to an interaction operation in the interface 200B in response to the interaction operation associated with the first live streaming room.

In some embodiments, such the interaction operation may include, for example, an interaction operation of a user (for example, a host user or an audience user, etc.) in the first live streaming room regarding a specific virtual resource. For example, the user may select a specific virtual resource (for example, a virtual gift resource, a virtual item resource, etc.) and trigger a corresponding interaction operation accordingly.

Accordingly, the terminal device 110, for example, may present a dynamic effect 208 in the interface 200B. The dynamic effect 208, for example, may correspond to the received interaction operation. Taking the virtual item resource as an example, different virtual item resources , for example, may trigger different types of dynamic effects 208.

In some embodiments, the dynamic effect 208 may be presented independently of the plurality of display areas (for example, the display area 202 and the display area 204) in the interface 200B. For example, the terminal device 110 may superimpose and display the dynamic effect 208 on the interface 200B. As another example, the terminal device 110, for example, may also display the dynamic effect 208 in the interaction area 206.

In some embodiments, the terminal device 110 may further present a dynamic effect 210 in a display area 215 corresponding to the first live streaming room. The dynamic effect 208, for example, may be the same as the dynamic effect 210.

As an example, the terminal device 110 may only display one of the dynamic effect 208 or the dynamic effect 210 as the first dynamic effect in the live streaming interface corresponding to the first live streaming room. Alternatively, the terminal device 110 may also display both the dynamic effect 208 and the dynamic effect 210 as the first dynamic effect in the live streaming interface corresponding to the first live streaming room.

As an example, the dynamic effect 208 and the dynamic effect 210 may be triggered based on an independent rendering mechanism, and may have a substantially time-synchronized dynamic effect process. As an example, the dynamic effect 210 may be superimposed and displayed into the live streaming image of the first live streaming room, for example, as a part of the live streaming image. In some embodiments, the display position of the dynamic effect 210 in the display area 202 may also be determined based on the display position of an object 214 (for example, a human object) in the display area 202. For example, taking the first dynamic effect 210 as a "slingshot" as an example, it may be displayed in association with a human hand in the live streaming image of the first live streaming room, thereby presenting a more realistic interaction effect.

Further, the terminal device 110 may also display a second dynamic effect corresponding to the interaction event in the display area 204, for example, a dynamic effect 212. In some embodiments, the first dynamic effect (for example, the dynamic effect 208 and/or the dynamic effect 210) and the second dynamic effect (for example, the dynamic effect 212) may be a set of mutually-coordinated dynamic effects, or may be different parts of an overall dynamic effect.

As an example, the first dynamic effect may correspond to, for example, a dynamic effect of launching an item through a slingshot. The second dynamic effect may correspond to, for example, a dynamic effect of the item blooming in the image. It would be appreciated that such a specific dynamic effect style is only illustrative and is not intended to limit the present disclosure.

In some embodiments, similar to the dynamic effect 210, the display position of the dynamic effect 212 in the display area 204 may also be determined based on the display position of an object 216 (for example, a human object) in the display area 204. For example, taking the dynamic effect 212 as a blooming dynamic effect as an example, it may be displayed, for example, in the position of a human face in the live streaming image of the second live streaming room.

In some embodiments, the second dynamic effect may further include applying a corresponding effect to the live streaming image in the display area 216. For example, the dynamic effect 212 may also cause a target part of a specific object in the live streaming image of the second live streaming room to produce a corresponding deformation.

Specifically, the terminal device 110 may recognize a target object (for example, a face object) in the live streaming image displayed in the display area 216, and may further apply a corresponding effect (for example, a face deformation effect) to the recognized target object. In this way, the embodiments of the present disclosure may further improve the experience of interaction between live streaming rooms.

In some embodiments, as shown in FIG. 2B, the terminal device 110 may further present an indication element 218 in the live streaming interface 200B to represent an association between the dynamic effect 208 and the dynamic effect 212.

As an example, the indication element 218 may represent a motion trail of a thrown item, and the end position of its motion may be the generation position of the dynamic effect 212. In some embodiments, the presentation moment of the dynamic effect 212, for example, may be later than the presentation moment of the dynamic effect 208 or the dynamic effect 210. Therefore, the embodiments of the present disclosure may provide the user with a set of visually associated dynamic effects across live streaming rooms, thereby improving the user's interaction experience.

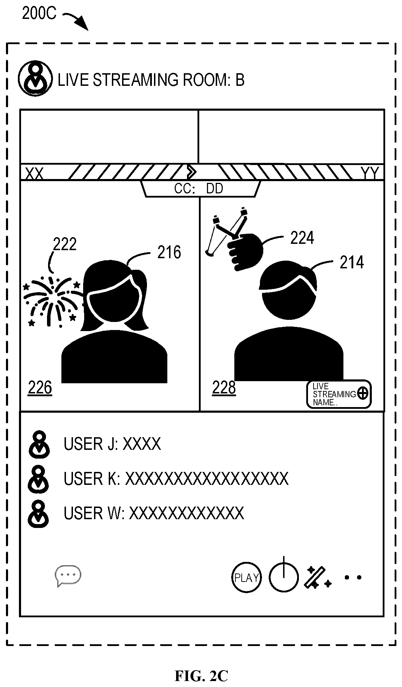

Further, FIG. 2C illustrates a live streaming interface 200C of the second live streaming room. Similar to the interaction process described with reference to the interface 200A and the interface 200B, when a specific interaction operation occurs in the first live streaming room, the terminal device 110 corresponding to a user (for example, a host user or an audience user) in the second live streaming room may present a dynamic effect 224 (also referred to as a first dynamic effect) in a display area 228 corresponding to the first live streaming room. Accordingly, the terminal device 110 may also display a dynamic effect 222 (also referred to as a second dynamic effect) in a display area 226 corresponding to the second live streaming room.

With reference to the process described above, the display position of the dynamic effect 224, for example, may be determined based on the display position of the object 214 in the display area 228. The display position of the dynamic effect 222, for example, may also be determined based on the display position of the object 216 in the display area 226.

Similarly, the dynamic effect 222 may further include, for example, applying a specific effect to the live streaming image in the display area 226, for example, to cause the object 216 to deform.

Therefore, the embodiments of the present disclosure are not only capable of presenting dynamic effects across live streaming rooms in the live streaming interface where interaction actions are initiated, but also capable of presenting corresponding dynamic effects in the live streaming interfaces of other associated live streaming rooms.

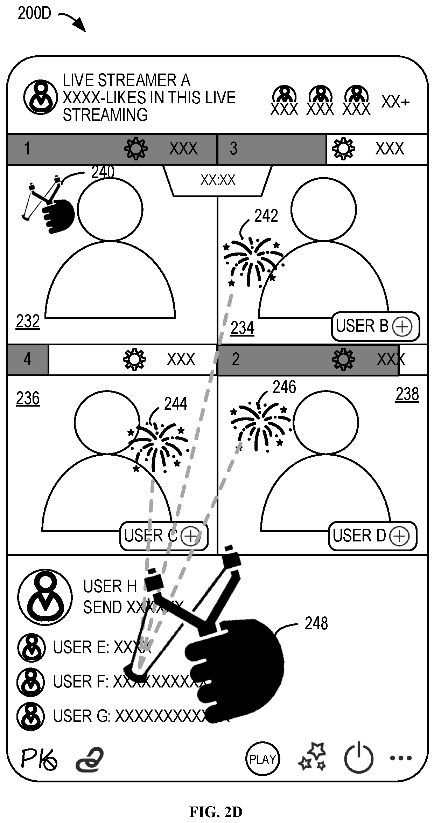

In still some embodiments, as shown in FIG. 2D, the first live streaming room may participate in live streaming interaction events of more than two live streaming rooms. Taking FIG. 2D as an example, the interface 200D may include, for example, a display area 232 corresponding to the first live streaming room, a display area 234 corresponding to the second live streaming room, a display area 236 corresponding to a third live streaming room, and a display area 238 corresponding to a fourth live streaming room.

Similar to the process introduced above, when a specific interaction operation occurs in the first live streaming room, the terminal device 110 may display a corresponding first dynamic effect (for example, a dynamic effect 248 and/or a dynamic effect 240) in the interface 200D.

Accordingly, the terminal device 110 may also display a corresponding second dynamic effect in the live streaming images of other one or more live streaming rooms participating in the live streaming interaction event. As shown in FIG. 2D, the terminal device 110 may display corresponding second dynamic effects in the display area 234, the display area 236 and the display area 238, for example, a dynamic effect 242, a dynamic effect 244, and a dynamic effect 246.

In some embodiments, the dynamic effect 242, the dynamic effect 244, and the dynamic effect 246 may have the same style, for example, the same dynamic effect contents. Accordingly, the dynamic effect 242, the dynamic effect 244, and the dynamic effect 246 may be triggered substantially at the same time and have a substantially synchronized dynamic effect process.

In still some embodiments, the terminal device 110 may further determine, for example, one or more live streaming rooms to which the second dynamic effect will be applied from the plurality of live streaming rooms based on the received interaction operation.

For example, a user in the first live streaming room may select a specific virtual item resource and apply it to the second live streaming room, for example. In this case, the terminal device 110 may only display the corresponding second dynamic effect in the display area 232, but not display the corresponding second dynamic effect in the display area 236 or the display area 238.

It would be appreciated that for the live streaming interfaces corresponding to other live streaming rooms, reference may be made to the content described in FIG. 2C above for their display mechanisms. That is, the corresponding live streaming interface may first present the corresponding first dynamic effect and second dynamic effect in the corresponding display area.

### EXAMPLE PROCESS

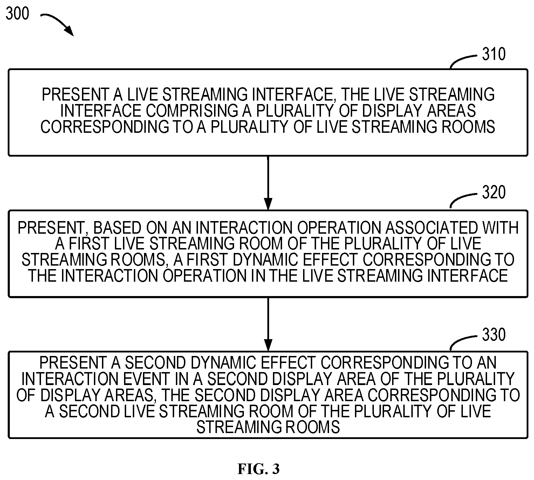

FIG. 3 illustrates a flowchart of an example live streaming interaction process 300 in some embodiments according to the present disclosure. The process 300 may be implemented at the terminal device 110 associated with a user (for example, a streaming host, a user participating in a live streaming event, or an audience) in a live streaming room. The process 300 will be described below with reference to FIG. 1.

As shown in FIG. 3, at a block 310, the terminal device 110 presents a live streaming interface, the live streaming interface including a plurality of display areas corresponding to a plurality of live streaming rooms.

At a block 320, the terminal device 110 presents, based on an interaction operation associated with a first live streaming room of the plurality of live streaming rooms, a first dynamic effect corresponding to the interaction operation in the live streaming interface.

At a block 330, the terminal device 110 presents a second dynamic effect corresponding to an interaction event in a second display area of the plurality of display areas, the second display area corresponding to a second live streaming room of the plurality of live streaming rooms.

In some embodiments, presenting the first dynamic effect corresponding to the interaction operation in the live streaming interface includes: presenting the first dynamic effect in a first display area of the plurality of display areas, the first display area corresponding to the first live streaming room.

In some embodiments, the live streaming interface corresponds to the first live streaming room, and presenting the first dynamic effect corresponding to the interaction operation in the live streaming interface includes: displaying the first dynamic effect in the live streaming interface independently of the plurality of display areas.

In some embodiments, the process 300 further includes: presenting an indication element in the live streaming interface, the indication element being configured to represent an association between the first dynamic effect and the second dynamic effect.

In some embodiments, the plurality of live streaming rooms further include at least a third live streaming room, and the process 300 further includes: presenting a third dynamic effect corresponding to the interaction event in a third display area corresponding to the third live streaming room in the plurality of display areas.

In some embodiments, the third dynamic effect has the same style as the second dynamic effect.

In some embodiments, the second live streaming room is determined from the plurality of live streaming rooms based on the interaction operation.

In some embodiments, a first display position of the first dynamic effect is determined by a position of a first object in a first display area; or a second display position of the second dynamic effect is determined by a position of a second object in the second display area.

In some embodiments, the second dynamic effect includes applying a corresponding effect to a live streaming image in the second display area.

In some embodiments, the process 300 further includes: recognizing a target object in the live streaming image in the second display area; and applying the corresponding effect to the target object.

In some embodiments, a presentation moment of the second dynamic effect is later than a presentation moment of the first dynamic effect.

In some embodiments, the interaction operation indicates a selection of a target user regarding a virtual resource.

### EXAMPLE APPARATUS AND DEVICE

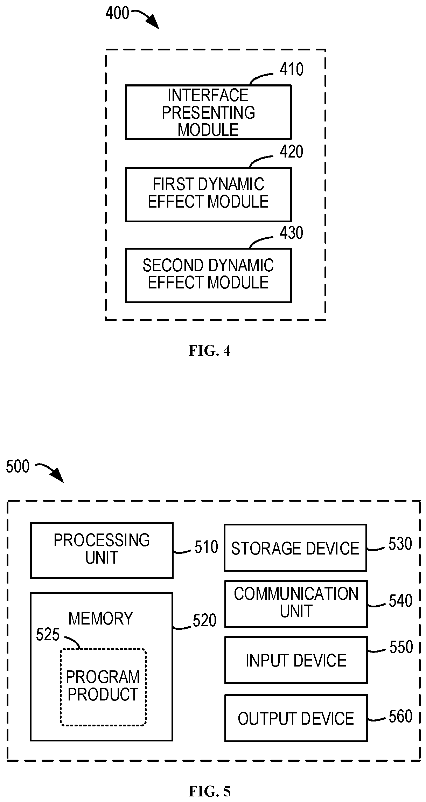

The embodiments of the present disclosure further provide corresponding apparatuses for implementing the above methods or processes. FIG. 4 illustrates a schematic structural block diagram of an apparatus 400 for live streaming interaction in some embodiments according to the present disclosure. The apparatus 400 may be implemented as or included in the terminal device 110. Each module/component in the apparatus 400 may be implemented by hardware, software, firmware, or any combination thereof.

As shown in FIG. 4, the apparatus 400 includes an interface presenting module 410, configured to present a live streaming interface, the live streaming interface including a plurality of display areas corresponding to a plurality of live streaming rooms; a first dynamic effect module 420, configured to present, based on an interaction operation associated with a first live streaming room of the plurality of live streaming rooms, a first dynamic effect corresponding to the interaction operation in the live streaming interface; and a second dynamic effect module 430, configured to present a second dynamic effect corresponding to an interaction event in a second display area of the plurality of display areas, the second display area corresponding to a second live streaming room of the plurality of live streaming rooms.

In some embodiments, the first dynamic effect module 420 is further configured to present the first dynamic effect in a first display area of the plurality of display areas, the first display area corresponding to the first live streaming room.

In some embodiments, the live streaming interface corresponds to the first live streaming room, and presenting the first dynamic effect corresponding to the interaction operation in the live streaming interface includes: displaying the first dynamic effect in the live streaming interface independently of the plurality of display areas.

In some embodiments, the apparatus 400 further includes an indication module configured to: present an indication element in the live streaming interface, the indication element being configured to represent an association between the first dynamic effect and the second dynamic effect.

In some embodiments, the plurality of live streaming rooms further include at least a third live streaming room, and the apparatus 400 further includes a third dynamic effect module configured to: present a third dynamic effect corresponding to the interaction event in a third display area corresponding to the third live streaming room in the plurality of display areas.

In some embodiments, the third dynamic effect has the same style as the second dynamic effect.

In some embodiments, the second live streaming room is determined from the plurality of live streaming rooms based on the interaction operation.

In some embodiments, a first display position of the first dynamic effect is determined by a position of a first object in a first display area; or a second display position of the second dynamic effect is determined by a position of a second object in the second display area.

In some embodiments, the second dynamic effect includes applying a corresponding visual effect to a live streaming image in the second display area.

In some embodiments, the apparatus 400 further includes an application module configured to: recognize a target object in the live streaming image in the second display area; and apply the corresponding effect to the target object.

In some embodiments, a presentation moment of the second dynamic effect is later than a presentation moment of the first dynamic effect.

In some embodiments, the interaction operation indicates a selection of a target user regarding a virtual resource.

FIG. 5 illustrates a block diagram of an electronic device 500 in which one or more embodiments of the present disclosure may be implemented. It would be appreciated that the electronic device 500 shown in FIG. 5 is only illustrative and should not constitute any limitation on the functions and scope of the embodiments described herein. The electronic device 500 shown in FIG. 5 may be configured to implement the terminal device 110 in FIG. 1.

As shown in FIG. 5, the electronic device 500 is in the form of a general-purpose electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may perform various processes based on the programs stored in the memory 520. In a multi-processor system, a plurality of processing units execute computer executable instructions in parallel to improve the parallel processing capability of the electronic device 500.

The electronic device 500 typically includes a plurality of computer storage medium. Such medium may be any available medium that is accessible to the electronic device 500, including but not limited to volatile and non-volatile medium, removable and non-removable medium. The memory 520 may be a volatile memory (for example, a register, a cache, a Random Access Memory (RAM)), a non-volatile memory (such as a Read-Only Memory (ROM), an Electrically Erasable Programmable Read-Only Memory (EEPROM), a flash memory), or any combination thereof. The storage device 530 may be a removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in FIG. 5, a disk drive for reading from or writing to a removable, non-volatile disk (such as a "floppy disk"), and an optical disk drive for reading from or writing to a removable, non-volatile optical disk may be provided. In these cases, each drive may be connected to the bus (not shown) by one or more data medium interfaces. The memory 520 may include a computer program product 525 having one or more program modules configured to perform various methods or acts of various embodiments of the present disclosure.

The communication unit 540 enables communication with other electronic devices over a communication medium. Additionally, the functions of the components of the electronic device 500 may be implemented by a single computing cluster or a plurality of computing machines, which may communicate through communication connections. Therefore, the electronic device 500 may use a logical connection with one or more other servers, a network Personal Computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) such as a storage device and a display device, as needed, through the communication unit 540, communicate with one or more devices that enable the user to interact with the electronic device 500, or communicate with any devices (such as a network card and a modem) that enable the electronic device 500 to communicate with one or more other electronic devices. Such communication may be performed via input/output (I/O) interfaces (not shown).

According to an exemplary implementation of the present disclosure, there is provided a computer-readable storage medium having computer executable instructions stored thereon, where the computer executable instructions are executed by a processor to implement the method described above. According to an exemplary implementation of the present disclosure, there is further provided a computer program product tangibly stored on a non-transitory computer-readable medium and including computer executable instructions, and the computer executable instructions are executed by a processor to implement the method described above.

Various aspects of the present disclosure are described herein with reference to flowcharts and/or block diagrams of methods, apparatuses, devices, and computer program products implemented according to the present disclosure. It would be appreciated that each block of the flowcharts and/or block diagrams, and combinations of the blocks in the flowcharts and/or block diagrams may be implemented by computer-readable program instructions.

These computer-readable program instructions may be provided to the processing unit of a general-purpose computer, a special-purpose computer, or other programmable data processing apparatus to produce a machine, so that when these instructions are executed by the processing unit of a computer or other programmable data processing apparatus, an apparatus for implementing the functions/actions specified in one or more blocks in the flowcharts and/or block diagrams is produced. These computer-readable program instructions may also be stored in a computer-readable storage medium, these instructions make the computer, the programmable data processing apparatus and/or other devices work in a specific way, and thus, the computer-readable medium storing the instructions includes a manufactured product, which includes instructions for implementing various aspects of the functions/actions specified in one or more blocks in the flowcharts and/or block diagrams.

The computer-readable program instructions may be loaded onto a computer, another programmable data processing apparatus, or other devices, causing a series of operation steps are performed on the computer, the other programmable data processing apparatus, or the other devices to produce a computer-implemented process, which causes the instructions executed on the computer, the other programmable data processing apparatus, or the other devices to implement the functions/actions specified in one or more blocks in the flowcharts and/or block diagrams.

The flowcharts and block diagrams in the drawings show the possibly implemented architectures, functions, and operations of the systems, methods, and computer program products according to a plurality of implementations of the present disclosure. In this regard, each block in the flowchart or block diagram may represent a module, program segment, or part of an instruction, which includes one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a special-purpose hardware-based system that executes specified functions or actions, or may be implemented by a combination of special-purpose hardware and computer instructions.

The implementations of the present disclosure have been described above, and the above description is illustrative, not exhaustive, and is not limited to the disclosed implementations. Without departing from the scope and spirit of the illustrated implementations, many modifications and changes will be apparent to those of ordinary skill in the art. The terminology used herein has been chosen to best explain the principles of the implementations, the practical applications, or improvements to the technologies in the market, or to enable those skilled artisans to understand the implementations disclosed herein.

## Claims

1. A method for live streaming interaction, comprising:
presenting a live streaming interface, the live streaming interface comprising a plurality of display areas corresponding to a plurality of live streaming rooms;
presenting, based on an interaction operation associated with a first live streaming room of the plurality of live streaming rooms, a first dynamic effect corresponding to the interaction operation in the live streaming interface; and
presenting a second dynamic effect corresponding to an interaction event in a second display area of the plurality of display areas, the second display area corresponding to a second live streaming room of the plurality of live streaming rooms.

2. The method of claim 1, wherein presenting the first dynamic effect corresponding to the interaction operation in the live streaming interface comprises:
presenting the first dynamic effect in a first display area of the plurality of display areas, the first display area corresponding to the first live streaming room.

3. The method of claim 1, wherein the live streaming interface corresponds to the first live streaming room, and presenting the first dynamic effect corresponding to the interaction operation in the live streaming interface comprises:
displaying the first dynamic effect in the live streaming interface independently from the plurality of display areas.

4. The method of claim 3, further comprising:
presenting an indication element in the live streaming interface, the indication element being configured to represent an association between the first dynamic effect and the second dynamic effect.

5. The method of claim 1, wherein the plurality of live streaming rooms further comprise at least a third live streaming room, and the method further comprises:
presenting a third dynamic effect corresponding to the interaction event in a third display area corresponding to the third live streaming room in the plurality of display areas.

6. The method of claim 5, wherein the third dynamic effect has a same style as the second dynamic effect.

7. The method of claim 1, wherein the second live streaming room is determined from the plurality of live streaming rooms based on the interaction operation.

8. The method of claim 1, wherein:
a first display position of the first dynamic effect is determined by a position of a first object in the first display area; or
a second display position of the second dynamic effect is determined by a position of a second object in the second display area.

9. The method of claim 1, wherein the second dynamic effect comprises applying a corresponding effect to a live streaming image in the second display area.

10. The method of claim 9, further comprising:
recognizing a target object in the live streaming image in the second display area; and
applying the corresponding effect to the target object.

11. The method of claim 1, wherein a presentation moment of the second dynamic effect is later than a presentation moment of the first dynamic effect.

12. The method of claim 1, wherein the interaction operation indicates a selection of a target user regarding a virtual resource.

13. A apparatus for live streaming interaction, comprising:
an interface presenting module, configured to present a live streaming interface, the live streaming interface comprising a plurality of display areas corresponding to a plurality of live streaming rooms;
a first dynamic effect module, configured to present, based on an interaction operation associated with a first live streaming room of the plurality of live streaming rooms, a first dynamic effect corresponding to the interaction operation in the live streaming interface; and
a second dynamic effect module, configured to present a second dynamic effect corresponding to an interaction event in a second display area of the plurality of display areas, the second display area corresponding to a second live streaming room of the plurality of live streaming rooms.

14. An electronic device, comprising:
at least one processing unit; and
at least one memory, wherein the at least one memory is coupled to the at least one processing unit and stores instructions executable by the at least one processing unit, the instructions, when executed by the at least one processing unit, causing the electronic device to perform the method of any of claims 1 to 12.

15. A computer-readable storage medium, having a computer program stored thereon, wherein the computer program is executable by a processor to implement the method of any of claims 1 to 12.
